# EUROPEAN PATENT SPECIFICATION

(11) **EP 3 474 963 B1**
(45) Date of publication and mention of the grant of the patent: **19.04.2023**
(21) Application number: 17748962.2
(22) Date of filing: 27.06.2017
(51) Int. Cl.: B01D 1/00, C02F 1/10

(54) **SYSTEM AND METHOD TO REMOVE SOLIDS AND LIQUID CONTAMINANTS FROM A PROCESS STREAM BY MIXING THE STREAM WITH A HEATING MEDIUM, AND APPLICATIONS THEREOF**
SYSTEM UND VERFAHREN ZUR ENTFERNUNG VON FESTSTOFFEN UND FLÜSSIGEN VERUNREINIGUNGEN AUS EINEM PROZESSSTROM DURCH MISCHUNG DER STROMS MIT EINEM HEIZMEDIUM UND ANWENDUNGEN DAVON
SYSTÈME ET PROCÉDÉ POUR ÉLIMINER DES SOLIDES ET DES CONTAMINANTS LIQUIDES D'UN FLUX DE TRAITEMENT PAR MÉLANGE DU FLUX AVEC UN MILIEU DE CHAUFFAGE, ET LEURS APPLICATIONS

(30) Priority: 27.06.2016 US 201615193839; 27.06.2016 US 201615193872; 27.06.2016 US 201615193813; 27.06.2016 US 201615193723; 27.06.2016 US 201615193771
(43) Date of publication of application: 01.05.2019
(73) Proprietor: Cameron Solutions, Inc., Houston, TX 77027 (US)
(72) Inventor: ZHENG, Z., Frank, Cypress, TX 77433 (US); KING, Christopher, Stephen, Houston, TX 77082 (US); NEMMARA, Harihara, V., Katy, TX 77494 (US); HENLEY, Matthew, S., Spring, TX 77388 (US); MESSENGER, Brian, Edward, Hook Hampshire RG279SF (GB)
(74) Representative: Schlumberger Intellectual Property Department
(86) International application number: PCT/US2017/039490
(87) International publication number: WO 2018/005483

(56) References cited:
- WO-A1-2007/073204
- DE-A1- 2 346 609
- GB-A- 1 262 458
- US-A- 3 181 600

## Description

### BACKGROUND

This section is intended to introduce the reader to various aspects of art that may be related to various aspects of the present disclosure, which are described or claimed below. This discussion is believed to be helpful in providing the reader with background information to facilitate a better understanding of the various aspects of the present disclosure. Accordingly, it should be understood that these statements are to be read in this light, and not as admissions of prior art.

This disclosure is in the field of systems and methods for removing dissolved and undissolved solids and/or liquid contaminants from a process stream, for example, vaporization and desalination processes such as, but not limited to, those used in mono ethylene glycol ("MEG") reclamation applications, seawater desalination applications, total dissolved solids reduction applications, and general process water treatment for reuse or disposal. This disclosure is also in the field of steam generation processes and reboiling process fluids such as, but not limited to, those used in distillation.

Current vaporization, desalination, and steam generation processes are complicated, expensive, and typically require extensive pretreatment. In some cases, the cost of pretreatment exceeds the cost of the actual vaporization, desalination, or boiling processes. Similarly, reboilers are prone to scaling problems when the process stream has the tendency to form scale due to its physical and chemical nature.

US 8652304 B2 ("Nazzer") discloses a method of extracting dissolved or undissolved solids from a mixture of water and a process liquid or stream. The mixture is introduced into a mixing zone within or upstream of a separation vessel where it is further mixed with a recycle fluid extracted from a liquid pool zone of the separator vessel and pumped through a heat exchanger.

Vaporization occurs in this mixing zone (where more than 99% of the volatile components of the feed stream are vaporized). The resulting stream is then transferred to the separator vessel in which the vapor is separated, with the solid and liquid components falling into the liquid pool zone of the separator vessel. A portion of these solids and liquids that bond to these solids then passes through a stripping zone of the separator vessel. Water residing within the stripping zone displaces the liquids bound to the solids and an aqueous waste stream with dissolved or nondissolved solids results.

Because this method requires a mixing zone for vaporization outside of the liquid pool, the required equipment is difficult to design and prone to scaling and plugging. The method also does not allow for vaporization within the liquid pool and requires the heating medium - *i.e.,* the recycle fluid, immiscible with the process stream and lighter than the water in the stripping zone - to be recycled at a rate of at least ten times that of the process feed rate. This high recycle rate is required because the method must limit the temperature difference between the recycle fluid and the process stream in order to avoid thermal degradation effects. Additionally, the method does not allow for partial vaporization with a blowdown.

Nazzer's method also requires a stripping zone for solids removal. A stripping zone is prone to corrosion because of unvaporized (solids) components from the process stream. The stripping zone also presents safety concerns due to the risk of higher temperature oil contacting water. To reduce the safety concern, the oil must be cooled before it touches the water in the stripping zone, but cooling the oil increases its viscosity and ineffective solids separation results. The stripping zone does not allow for partial vaporization in situations like a reboiler due to the mixing of the unvaporized process fluid with the water in the stripping zone. GB 1262458 A furthermore discloses a distillation or desalination apparatus for distillation of e.g. sea water. US 3181600 A moreover discloses a liquid-to-liquid heat exchanger. Additionally, DE 2346609 A1 discloses a method of evaporating a crust-forming or corrosive solution. WO 2007/073204 A1 furthermore discloses a process and plant for the regeneration of glycol.

### SUMMARY

The invention resides in a method and a system to desalinate a process stream containing feed water as defined in claims 1 and 3 respectively.

### BRIEF DESCRIPTION OF THE DRAWINGS

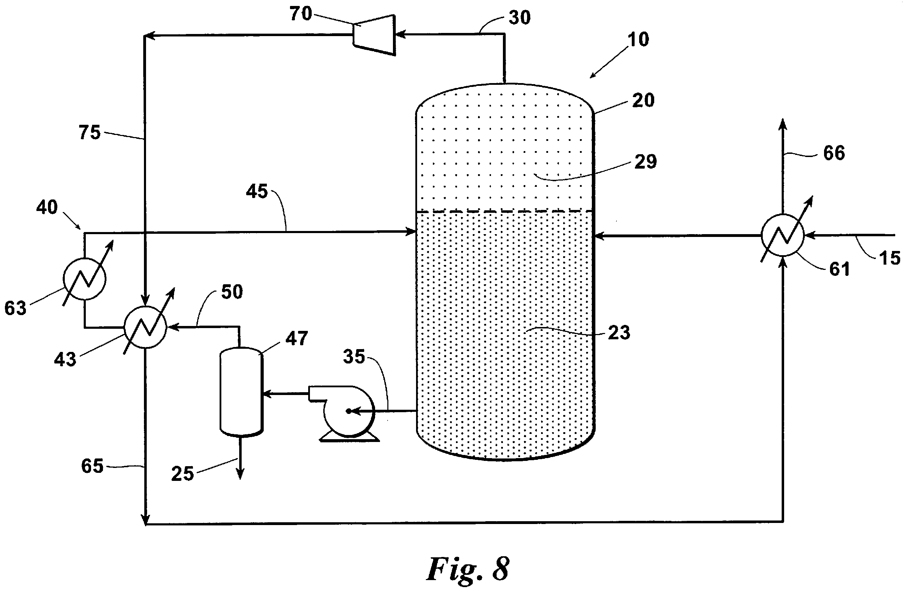

So that the above recited features can be understood in detail, a more particular description may be had by reference to embodiments, some of which are illustrated in the appended drawings, wherein like reference numerals denote like elements. It is to be noted, however, that the appended drawings illustrate various embodiments of which only fig. 8 is an illustration of the embodiment relating to the invention. Other figures may show aspects not related to the invention.
FIG. 1 is a schematic of an embodiment of a system and method not according to the invention to remove solids or liquid contaminants from a process stream.
FIG. 2 is a schematic of an embodiment of a system and method not according to the invention to remove solids or liquid contaminants from a process stream. The pump-around loop includes a separator for removing the unvaporized portion of the process stream.
FIG. 3 is a schematic of an embodiment of a system and method not according to the invention to remove solids or liquid contaminants from a process stream. The vaporized process stream is partially condensed.
FIG. 4 is a schematic of an embodiment of a system and method not according to the invention to remove solids or liquid contaminants from a process stream. Heat recovered from condensing the vaporized process stream is used to pre-heat the process stream before it is routed to the liquid pool zone of the vessel.
FIG. 5 is a schematic of an embodiment of a system and method not according to the invention to remove solids or contaminants from a process stream. The vaporized process stream is compressed and then condensed in the pump-around loop to help heat the heating medium being recycled in the pump-around loop.

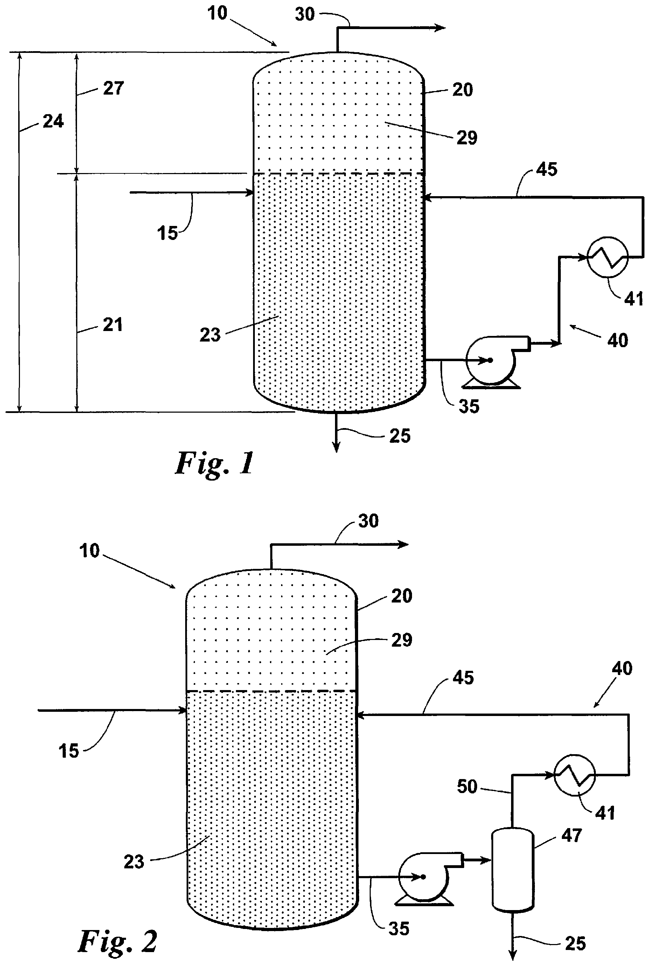

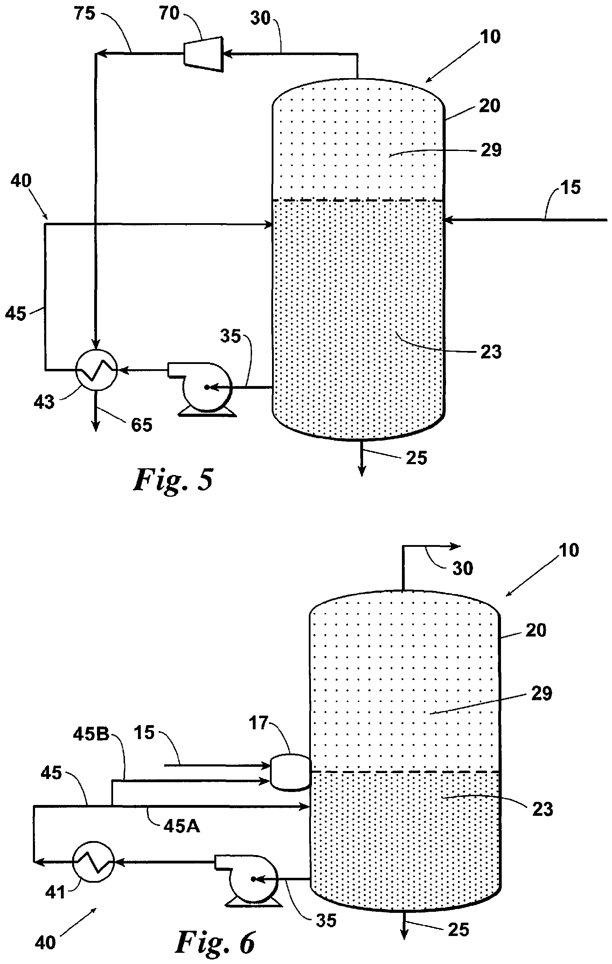

FIG. 6 is a schematic of an embodiment of a system and method not according to the invention to remove solids or liquid contaminants from a process stream. Pre-mixing of the process stream and heating medium occurs outside of the liquid pool zone of the vessel but at a level below that needed for vaporization. The pump-around loop may include a separator for removing the unvaporized portion of the process stream (*see e.g.,* FIG. 2). Pre-mixing may also be done to provide a relatively small amount of vaporization to enhance the pre-mixing and accelerate the fluid when it enters the liquid pool zone.
FIG. 7 is a schematic of an embodiment of a system and method not according to the invention to remove solids or liquid contaminants from a process stream containing feed water.
FIG. 8 is a schematic of an embodiment of a system and method according to the invention to remove solids or liquid contaminants from a process stream containing feed water. The pump-around loop includes a separator for removing the unvaporized portion of the process stream.

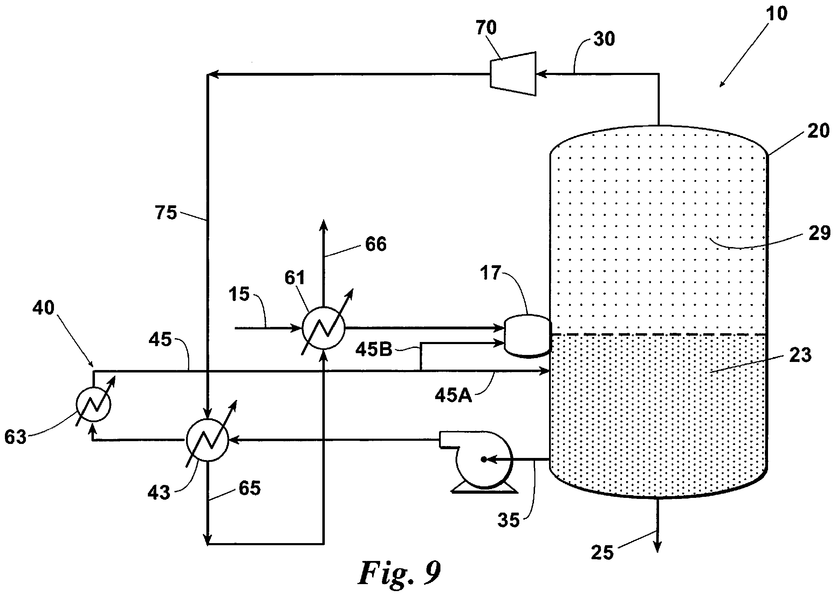

FIG. 9 is a schematic of an embodiment of a system and method not according to the invention to remove solids or liquid contaminants from a process stream containing feed water. Pre-mixing of the process stream and heating medium occurs outside of the liquid pool zone of the vessel but at a level below that needed for vaporization. The pump-around loop may include a separator for removing the unvaporized portion of the process stream (*see e.g.,* FIG. 8). Pre-mixing may also be done to provide a relatively small amount of vaporization to enhance the pre-mixing and accelerate the fluid when it enters the liquid pool zone.

### ELEMENTS AND NUMBERING USED IN THE DRAWINGS AND DETAILED DESCRIPTION

- 10: System or method
- 15: Process stream
- 15A: Process stream prior to pre-heating
- 15B: Pre-heated process stream
- 17: Mixer within or outside of 20
- 20: Vessel
- 21: Liquid pool zone
- 23: Heating medium
- 24: Interior volume
- 25: Unvaporized portion of 15
- 27: Vapor separation zone
- 29: Vaporized volatile components of 15
- 30: Vaporized process stream
- 35: Removed heating medium stream or mixture
- 40: Pump-around loop
- 41: Heater
- 43: Heater/condenser
- 45: Heated recycle stream
- 45A: Portion of 45 routed to vessel 20
- 45B: Portion of 45 routed to mixer 17
- 47: Separator or separator device
- 50: Heating medium stream substantially unvaporized portion-free or with a reduced unvaporized portion 25 (relative to 35)
- 60: Condenser
- 61: Process stream preheater
- 63: Secondary heater
- 65: Partially or totally condensed process stream
- 66: Cooled desalinated water
- 70: Compressor
- 75: Pressurized vaporized process stream

One or more specific embodiments of the present disclosure will be described below.

### DETAILED DESCRIPTION

The subject disclosure is further described in the following detailed description, and the accompanying drawing and schematic of non-limiting embodiment of the subject disclosure. The features depicted in the figure are not necessarily shown to scale. Certain features of the embodiments may be shown exaggerated in scale or in somewhat schematic form, and some details of elements may not be shown in the interest of clarity and conciseness.

In the following description, numerous details are set forth to provide an understanding of some embodiments of the present disclosure.

In the specification and appended claims, the terms "connect", "connection", "connected", "in connection with", and "connecting" are used to mean "in direct connect with" or "in connection with via one or more elements"; and the term "set" is used to mean "one element" or "more than one element". Further, the terms "couple", "coupling", "coupled", "coupled together", and "coupled with" are used to mean "directly coupled together" or "coupled together via one or more elements". As used herein, the terms "up" and "down", "upper" and "lower", "upwardly" and "downwardly", "upstream" and "downstream", "above" and "below", and other like terms indicated relative positions above or below a given point or element and are used in this description to more clearly describe some embodiments of the disclosure.

### Vaporization of Process Stream

The system and method may be used in applications such as but not limited to MEG reclamation; seawater desalination; steam generation; total dissolved solids ("TDS") reduction for produced water, desalter wash water, fracking flowback water, and amine reclamation. Unlike prior art systems and methods, there is no requirement for pretreatment of the process stream or low temperature differentials between the vaporization temperature of the stream and heating medium (*e.g*., limited to 10°C above the vaporization temperature due to the risk of scaling in the heat exchanger in the pump-around loop).

The embodiments of this disclosure may simplify the system and method to vaporize a process stream; reduce the costs associated with prior art vaporization systems and processes; generate a much smaller discharge stream relative to prior art systems and methods; and eliminate the design and operational challenges presented by mixing zones located outside of the liquid pool zone of the vessel and stripping zones for solids removal. The disclosure may also eliminate the need for light heating mediums relative to the process stream, and may eliminate the need for immiscible heating mediums. The disclosure also does not require the low temperature differential between the stream and heating medium or recycle rates of at least ten times greater than that of the process feed.

The disclosure also reduces, and potentially eliminates, pretreatment for the process stream while at the same time minimizing or eliminating scaling and fouling of equipment. Any pre-mixing of the process stream and the heating medium that occurs outside of the liquid pool zone may be done at a level below that at which the stream vaporizes. Pre-mixing may also be done to provide a relatively small amount of vaporization to enhance the pre-mixing and accelerate the fluid when it enters the liquid pool.

Embodiments of a system and method to vaporize volatile components of a process stream achieve vaporization of those components in the liquid pool zone of the vessel when the process stream contacts a heating medium residing in the liquid pool zone. The vessel is arranged to directly receive the process stream, thereby eliminating pre-treatment between it and the upstream process providing the stream. A pump-around loop heats a portion of the heating medium and recycles this heated portion back to the vessel.

The heating medium - which is immiscible with the process stream and may be lighter or heavier than the process stream - is maintained at an operating temperature required for the desired vaporization effects. Pre-mixing may also be done to provide a relatively small amount of vaporization to enhance the pre-mixing and accelerate the fluid when it enters the liquid pool. The vessel can also make use of blowdown to remove solids formed during the vaporization of the process stream. A separate vessel located in the pump-around loop is used for liquids-solids separation.

The different arrangements of the system and method 10 as shown in FIGS. 1 to 6 route a process stream 15 into a vessel 20 whose interior volume 24 is defined by a liquid pool zone 21 and a vapor separation zone 27. A heating medium 23 resides within the liquid pool zone 21 and this heating medium 23 is used to vaporize the volatile components 29 of the process stream 15. Mixing of the process stream 15 and heating medium 23 occurs naturally within the liquid pool zone 21 as the process stream 15 enters the zone 21.

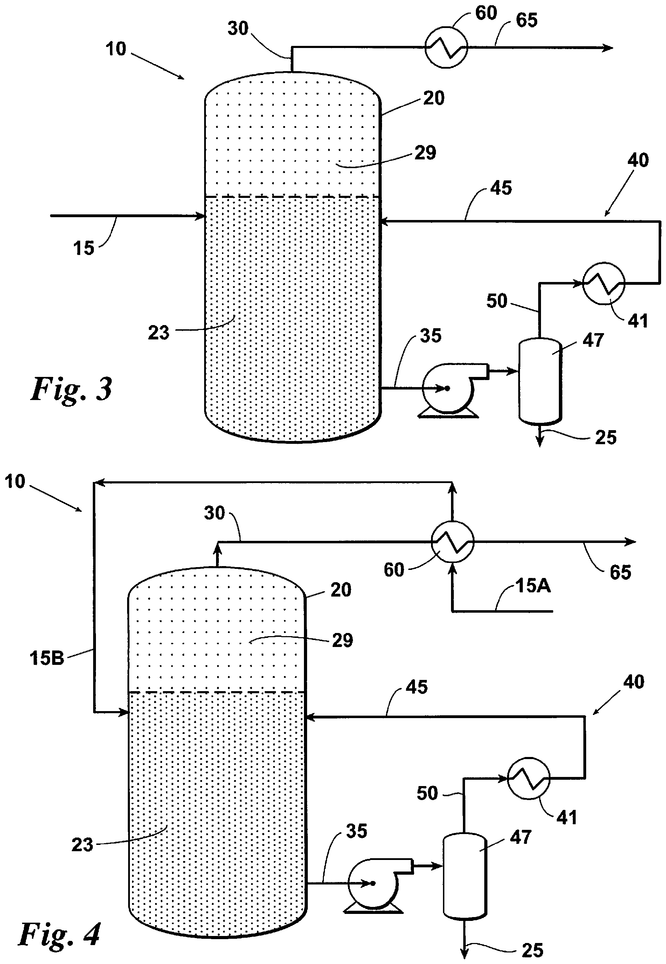

The now vaporized volatile components 29 of the process stream 15 migrate to a vapor separation zone 27 of the vessel 20 and are removed as a vaporized process stream 30. The vaporized process stream 30 may be routed to a condenser 60, as shown in FIGS. 3 and 4, to produce a partially or totally condensed process stream 65. As shown in FIG. 4, heat from the condenser 60 may be recovered and used to raise the temperature of process stream 15A so that the process stream 15 flows into the liquid pool zone 21 as pre-heated process stream 15B.

The vaporized process stream 30 may also be routed to a compressor 70, as shown in FIG. 5. The now pressurized vaporized process stream 75 is condensed in the pump-around loop 40, with heat being recovered and used to heat the recycle stream 45 while the partially or totally condensed process stream 65 leaves the system.

As the volatile components of the process stream 15 vaporize, the unvaporized portion 25 of the process stream 15, which may contain dissolved and undissolved solids, moves into the liquid pool zone 21 along with the heating medium 23. Unvaporized portion 25 may be separated from the heating medium 23 either within the vessel 20 or within a separator 47 located in the pump-around loop 40. No stripping zone is used to remove the unvaporized portion 25 of the process stream 15.

The separator 47 used in the pump-around loop 40 may be any separator suitable, including but not limited to a hydrocyclone, centrifuge, particulate filter, settling tank, some equivalent separation device, or a combination of separation devices. A heating medium stream 50 with a reduced amount of, or substantially without, unvaporized portion 25 exits the separator 47 and passes through the heater 41. The heated recycle stream 45 then recycles back to the liquid pool zone 21 of the vessel 20. The remaining unvaporized portion 25, if any, exits the system through the separator 47.

The heating medium 23 is maintained at an operating temperature that provides the desired vaporization effects. The heating medium 23 can be any heating medium depending on the make-up of process stream 15 and application-specific requirements. For example, the heating medium 23 could be one that one that is lighter than, heavier than, or the same density as the process stream 15. The heating medium 23 could also be one that forms either a homogeneous or heterogeneous mixture with the process stream 15. However, the heating medium 23 is less volatile than the volatile components of the process stream 15.

To keep the heating medium 23 at the selected operating temperature, a heater (not shown) can be placed in the liquid pool zone 21. Alternatively or additionally, a removed stream 35 of the heating medium 23, which may include part of the unvaporized portion 25 of the process stream 15 residing within the liquid pool zone 21, can be removed from the vessel 20 and routed to the pump-around loop 40 and its heater 41. The heated recycle stream 45 that may include part of the unvaporized portion 25 of the process stream 15 then recycles back to the liquid pool zone 21.

An embodiment of a method to vaporize a process stream includes routing the process stream 15 directly into the liquid pool zone 21 of the vessel 20 where it becomes mixed with a heating medium 23 that is less volatile than the process stream 15 and maintained at an operating temperature determined by vaporization requirements to vaporize the volatile components portion 29 of the process stream 15. The method also includes removing the vaporized volatile components 29 of the process stream 15 from the vapor separation zone 27 of the vessel 20 as a vaporized process stream 30.

Prior to the process stream 15 entering the liquid pool zone 21 there may be no pre-treatment of the stream 15 as it exits the upstream process providing the stream 15 and there may be no mixing of the process stream 15 with the heating medium 23. Pretreatment means treatment such as but not limited to chemical dosing, filtration using selectively permeable membranes, separators, or the use of ion exchange, deaerators or blowdown prior to the process stream 15 entering vessel 20 (or some combination of the above pretreatment methods). (Coarse straining of a kind known in the art and typically done ahead of pretreatment might be used if the feed is taken directly from a natural body of water or from a source with excessive undissolved solids.) If any pre-mixing of the process stream 15 and heating medium 23 occurs outside of the liquid pool zone 21 *(see e.g.,* mixer 17 in FIG. 6), the pre-mixing may be done at a level below that at which vaporization occurs. Therefore, vaporization of the process stream 15 occurs within the liquid pool zone 21 of the vessel 20.

Pre-mixing may also be done to provide a relatively small amount of vaporization to enhance the pre-mixing and accelerate the fluid when it enters the liquid pool zone 21. The amount of vaporization that occurs in pre-mixing may be less than that which occurs in the liquid pool. For example, during normal (non-turndown) operations no more than about 20% or about 5% of the volatile components in the process stream 15 may vaporize during pre-mixing. If the amount of vaporization does exceed that of the liquid pool, during normal operations vaporization during pre-mixing should not exceed about 80% or about 90% of the volatile components. Limiting the amount of vaporization during pre-mixing helps avoid the design challenges and scaling and plugging problems associated with the mixing zone of the prior art (*see* Background).

The heating medium 23 and process stream 15 forms a heterogenous mixture when residing within the liquid pool zone 21. Additionally, the density of the heating medium 23 can be greater than, less than, or equal to that of the process stream 15.

The method may also include removing a portion 35 of the heating medium 23 residing in the liquid pool zone 21 of the vessel 20; raising a temperature of the removed portion or stream 35 to produce a heated recycle stream 45; and routing the heated recycle stream 45 back to the liquid pool zone 21. The removed stream 35 can also be routed to a separator 47 to produce a heating medium stream 50 substantially unvaporized portion-free or with a reduced unvaporized portion 25. Once heated by heater 41, it can be returned to the liquid pool zone 21 as the heated recycle stream 45 (also substantially unvaporized portion-free or with a reduced unvaporized portion 25).

The method may also include condensing at least a portion of the vaporized process stream 30. Heat recovered from the condenser 60 can be used as pre-heating to raise the temperature of at least a portion of the process stream 15A prior to the process stream 15B entering the liquid pool zone 21 of the vessel 20. Alternatively or additionally, the method may include compressing at least a portion of the vaporized process steam 30. The pressurized vaporized process stream 75 is then condensed by heater/condenser 43 in the pump-around loop 40 and used to raise the temperature of the recycle stream 45.

An embodiment of a system to vaporize a process stream includes a vessel 20 arranged to contact a process stream 15 exiting an upstream process and route the process stream 15 into a heating medium 23 residing within the liquid pool zone 21 of the vessel 20. The interior volume 24 of the vessel 20 does not include a stripping zone for solids removal. The heating medium 23 is less volatile than the process stream 15 and maintained at an operating temperature determined by vaporization requirements. The vaporized volatile components 29 of the process stream 15 migrate to the vapor separation zone 27 of the vessel 20.

A pump-around loop 40 is arranged to receive a portion 35 of the heating medium 23 mixed with the unvaporized portion 25 of the process stream 15 that has moved into the heating medium 23 and then return the portion 35 back to the liquid pool zone 21 as a heated recycle stream 45. The pump-around loop 40 of the system may include a heater 41 as well as a separator 47 arranged upstream of the heater 41 so that the heated recycle stream 45 that is returned to the vessel 20 is substantially unvaporized portion-free or has a reduced unvaporized portion 25.

Prior to contacting the heating medium 23, the process stream 15 may not be mixed with the heating medium 23 outside of the liquid pool zone 21 of the vessel 20. If any pre-mixing of the stream 15 and heating medium 23 occurs, the mixing may be at a level below that required for vaporization of the volatile components 29. Pre-mixing may also be done to provide a relatively small amount of vaporization to enhance the pre-mixing and accelerate the fluid when it enters the liquid pool zone 21.

The system can also include a condenser 60 arranged to receive at least a portion of the vaporized process stream 30 exiting the vapor separation zone 27 of the vessel 20. Heat recovered from the condenser 60 may serve as a pre-heater to raise the temperature of the process stream 15A prior to the process stream 15B entering the liquid pool zone 21 of the vessel 20.

The system includes a compressor 70 arranged to receive at least a portion of the vaporized process stream 30. Heat recovered from condensing the pressurized vaporized process stream 75 in heater/condenser 43 is used in the pump-around loop 40 to raise the temperature of the recycle stream 45.

### Partial Vaporization of Process Stream

The system and method can be used in applications such as but not limited to MEG reclamation; seawater desalination; steam generation; total dissolved solids ("TDS") reduction for produced water, desalter wash water, fracking flowback water, and amine reclamation. Unlike prior art systems and methods, there is no pretreatment of the process stream or low temperature differentials between the vaporization temperature of the stream and heating medium (*e.g*., limited to 10°C above the vaporization temperature due to the risk of scaling in the heat exchanger in the pump-around loop).

The embodiments of this disclosure may simplify the system and method to partially vaporize a process stream; reduce the costs associated with prior art partial vaporization systems and processes; eliminate the design and operational challenges presented by mixing zones located outside of the liquid pool zone of the vessel and stripping zones for solids and unvaporized process stream removal; and eliminate the prior art's limitation of not being able to be used in partial vaporization applications in which a portion of the unvaporized process stream remains in liquid form. The disclosure eliminates the need for light heating mediums relative to the process stream. The disclosure also does not require the low temperature differential between the stream and heating medium or recycle rates of at least ten times greater than that of the process stream.

The disclosure also reduces, and potentially eliminates, pretreatment for the process stream while at the same time minimizing or eliminating scaling and fouling of equipment. Any pre-mixing of the process stream and the heating medium that occurs outside of the liquid pool zone may be done at a level below that at which the stream partially vaporizes. Pre-mixing may also be done to provide a relatively small amount of vaporization to enhance the pre-mixing and accelerate the fluid when it enters the liquid pool.

Embodiments of a system and method to partially vaporize the volatile components of a process stream achieve partial vaporization of those components in the liquid pool zone of the vessel when the process stream contacts a heating medium residing in the liquid pool zone. The vessel is arranged to directly receive the process stream, thereby eliminating pre-treatment between it and the upstream process providing the stream. A pump-around loop heats a portion of the heating medium and recycles this heated portion back to the vessel.

The heating medium - which is immiscible with the stream and can be lighter or heavier than the stream - is maintained at an operating temperature required for the desired partial vaporization effects. Pre-mixing may also be done to provide a relatively small amount of vaporization to enhance the pre-mixing and accelerate the fluid when it enters the liquid pool. The vessel can also make use of blowdown to remove solids formed during the vaporization of the process stream. Blowdown, as used here, refers to the removal of the unvaporized process stream with concentrated levels of dissolved or undissolved solids. A separate vessel located in the pump-around loop can be used for the separation of the blowdown.

The different arrangements of the system and method 10 as shown in FIGS. 1 to 6 route a process stream 15 into a vessel 20 whose interior volume 24 is defined by a liquid pool zone 21 and a vapor separation zone 27. A heating medium 23 resides within the liquid pool zone 21 and this heating medium 23 is used to partially vaporize the volatile components 29 of the process stream 15. Mixing of the process stream 15 and heating medium 23 occurs naturally within the liquid pool zone 21 as the process stream 15 enters the zone 21.

The now vaporized portions 29 of the process stream 15 migrate to a vapor separation zone 27 of the vessel 20 and are removed as a vaporized process stream 30. The vaporized process stream 30 can be routed to a condenser 60, as shown in FIGS. 3 and 4, to produce a partially condensed process stream 65. Heat from the condenser 60 may be recovered and used to raise the temperature of the process stream 15A so that process stream 15 flows into the liquid pool zone 21 as pre-heated process stream 15B.

The vaporized process stream 30 may also be routed to a compressor 70, as shown in FIG. 5. The now pressurized vaporized process stream 75 is condensed in the pump-around loop 40 by heater/condenser 43, with heat being recovered and used to heat the recycle stream 45.

As the volatile components 29 of the process stream 15 vaporize, the unvaporized portion 25 of the process stream 15 moves into the liquid pool zone 21 along with the heating medium 23. Because the unvaporized portion 25 is immiscible with the heating medium 23, that portion may be separated from the heating medium 23 in the vessel 20 or within a separator 47 located in the pump-around loop 40. The unvaporized portion 25, both liquid and undissolved solids, can be removed as blowdown. No stripping zone is used.

The separator 47 used in the pump-around loop 40 can be any separator suitable, including but not limited to a hydrocyclone, centrifuge, particulate filter, settling tank, or some other piece of separation device equivalent to these, or some combination of separation devices. A heating medium stream 50 with reduced amounts of, or without, the unvaporized portion 25 of the process stream 15 exits the separator 47 and passes through the heater 41. The heated recycle stream 45 then recycles back to the liquid pool zone 21 of the vessel 20. The heated recycle stream 45 may include part of the unvaporized portion 25 of the process stream 15.

The heating medium 23 is maintained at an operating temperature that provides the desired vaporization effects. The heating medium 23 can be any heating medium depending on the make-up of process stream 15 and application-specific requirements. For example, the heating medium 23 could be one that one that is lighter than or heavier than the process stream 15. However, the heating medium 23 is immiscible with the process stream 15 to form a heterogeneous mixture with the process stream 15. The heating medium 23 is also less volatile than the volatile components 29 of the process stream 15.

To keep the heating medium 23 at the selected operating temperature, a heater (not shown) can be placed in the liquid pool zone 21. Alternatively or additionally, a removed stream 35 of the heating medium 23, which may include part of the unvaporized portion 25 residing within the liquid pool zone 21, can be removed from the vessel 20 and routed to the pump-around loop 40 and its heater 41 to produce a heated recycle stream 45 that is recycled back to the liquid pool zone 21.

An embodiment of a method to partially vaporize a process stream includes routing the process stream 15 directly into the liquid pool zone 21 of the vessel 20 where it becomes mixed with a heating medium 23 that is less volatile than the process stream 15 and maintained at an operating temperature determined by vaporization requirements to partially vaporize the volatile components portion 29 of the process stream 15. The method also includes removing the vaporized portion 29 of the process stream 15 from the vapor separation zone 27 of the vessel 20 as a vaporized process stream 30.

Prior to the process stream 15 entering the liquid pool zone 21 there may be no pre-treatment of the stream 15 as it exits the upstream process providing the stream 15 and there may be no mixing of the process stream 15 with the heating medium 23. Pretreatment means treatment such as but not limited to chemical dosing, filtration using selectively permeable membranes, separators, or the use of ion exchange, deaerators or blowdown prior to the process stream 15 entering vessel 20 (or some combination of the above pretreatment methods). (Coarse straining of a kind known in the art and typically done ahead of pretreatment might be used if the feed is taken directly from a natural body of water or from a source with excessive undissolved solids.) If any pre-mixing of the process stream 15 and heating medium 23 occurs outside of the liquid pool zone 21 (*see e.g.,* mixer 17 in FIG. 6), the pre-mixing may be done at a level below that at which vaporization occurs. Therefore, partial vaporization of the process stream 15 occurs within the liquid pool zone 21 of the vessel 20.

Pre-mixing may also be done to provide a relatively small amount of vaporization to enhance the pre-mixing and accelerate the fluid when it enters the liquid pool zone 21. The amount of vaporization that occurs in pre-mixing may be less than that which occurs in the liquid pool zone 21. For example, during normal (non-turndown) operations no more than about 20% or about 5% of the volatile components in the process stream 15 may vaporize during pre-mixing. If the amount of vaporization does exceed that of the liquid pool, during normal operations vaporization during pre-mixing should not exceed about 80% or about 90% of the volatile components. Limiting the amount of vaporization during pre-mixing helps avoid the design challenges and scaling and plugging problems associated with the mixing zone of the prior art (*see* Background).

The heating medium 23 and process stream 15 form a heterogeneous mixture when residing within the liquid pool zone 21. Additionally, the density of the heating medium 23 can be greater than or less than that of the process stream 15.

The method also includes removing a portion 35 of the heating medium 23 residing in the liquid pool zone 21 of the vessel 20; raising a temperature of the removed portion or stream 35 to produce a heated recycle stream 45; and routing the heated recycle stream 45 back to the liquid pool zone 21. The removed stream 35 is routed to a separator 47 to produce heating medium stream 50 substantially unvaporized portion-free or with a reduced unvaporized portion 25. Once stream 50 is heated by heater 41, it can be returned to the liquid pool zone 21 as the heated recycled stream 45 (also substantially unvaporized portion-free or with a reduced unvaporized portion 25).

The method may also include condensing at least a portion of the vaporized process stream 30. Heat recovered from the condenser 60 can be used as pre-heating to raise the temperature of at least a portion of the process stream 15A prior to the process stream 15B entering the liquid pool zone 21 of the vessel 20. Alternatively or additionally, the method can include compressing at least a portion of the vaporized process steam 30. The pressurized vaporized process stream 75 is then condensed by heater/condenser 43 in the pump-around loop 40 and used to raise the temperature of the recycle stream 45.

An embodiment of a system to partially vaporize a process stream includes a vessel 20 arranged to contact a process stream 15 exiting an upstream process and route the process stream 15 into a heating medium 23 residing within the liquid pool zone 21 of the vessel 20. The interior volume 24 of the vessel 20 does not include a stripping zone for solids and liquids 25 removal. The heating medium 23 is less volatile than the process stream 15 and maintained at an operating temperature determined by vaporization requirements. The partially vaporized volatile components 29 of the process stream 15 migrate to the vapor separation zone 27 of the vessel 20.

A pump-around loop 40 is arranged to receive a portion 35 of the heating medium 23 mixed with the unvaporized portion 25 of the process stream 15 that has moved into the heating medium 23 and then return the portion 35 back to the liquid pool zone 21 as a heated recycle stream 45. The pump-around loop 40 of the system may also include a heater 41 as well as a separator 47 arranged upstream of the heater 41 so that a substantially unvaporized portion-free or reduced unvaporized portion heated recycled stream 45 is returned to the vessel 20.

Prior to contacting the heating medium 23, the process stream 15 may not be mixed with the heating medium 23 outside of the liquid pool zone 21 of the vessel 20. If any pre-mixing of the stream 15 and heating medium 23 occurs, the mixing may be at a level below that required for vaporization of the volatile components 29. Pre-mixing may also be done to provide a relatively small amount of vaporization to enhance the pre-mixing and accelerate the fluid when it enters the liquid pool zone 21.

The system may also include a condenser 60 arranged to receive at least a portion of a vaporized process stream 30 exiting the vapor separation zone 27 of the vessel 20. Heat recovered from the condenser 60 may serve as a pre-heater to raise the temperature of the process stream 15A prior to the process stream 15B directly entering the liquid pool zone 21 of the vessel 20.

Alternatively or additionally, the system can include a compressor 70 arranged to receive at least a portion of the vaporized process stream 30. Heat recovered from condensing the pressurized vaporized process stream 75 in heater/condenser 43 can be used in the pump-around loop 40 to raise the temperature of the recycle stream 45.

### Desalination of Process Stream

The embodiments of this disclosure may simplify the system and method to desalinate a process stream containing feed water; reduce the costs associated with prior art desalination processes; and eliminate the design and operational challenges presented by mixing zones located outside of the liquid pool zone of the vessel and stripping zones for solids removal. The disclosure eliminates the need for light heating mediums relative to the process stream and, in the case of total vaporization with a blowdown which contains the dissolved and undissolved solids portion of the process stream, eliminates the need for immiscible heating mediums. The disclosure also does not require the low temperature differential between the process stream and heating medium or recycle rates of at least ten times greater than that of the process stream.

The disclosure also reduces, and potentially eliminates, pretreatment for the process stream while at the same time minimizing or eliminating scaling and fouling of equipment. Because no heat exchanging surface is used directly in boiling, the disclosure can accommodate a wider range of feed water quality, thereby reducing the specifications for the process stream containing feed water and allowing a much greater choice for the source of the feed water. Any pre-mixing of the process stream and the heating medium that occurs outside of the liquid pool zone may be done at a level below that at which the water vaporizes. Pre-mixing may also be done to provide a relatively small amount of vaporization to enhance the pre-mixing and accelerate the fluid when it enters the liquid pool.

In some embodiments, the disclosed system and method may be used to desalinate a process stream containing feed water. Such embodiments eliminate the vaporization on the heat exchanging surface that drives existing feed water specifications. Therefore, a much wider choice for the source of (lower quality) feed water with very little or no pretreatment is allowed, including produced water and seawater sources.

The embodiments desalinate the process stream through vaporization (or partial vaporization) of the process stream when it contacts a heating medium residing in a liquid pool zone of a vessel. The vessel is arranged to directly receive the process stream, thereby eliminating pre-treatment between it and the upstream process providing the stream. A pump-around loop heats a portion of the heating medium and recycles this heated portion back to the vessel.

The heating medium, which can be lighter or heavier than the process stream, is maintained at an operating temperature required for the desired vaporization (and desalination) effects. If any pre-mixing of the process stream and heating medium occurs outside of the liquid pool, the pre-mixing may be at a level below that at which vaporization occurs. Pre-mixing may also be done to provide a relatively small amount of vaporization to enhance the pre-mixing and accelerate the fluid when it enters the liquid pool. The vessel can also make use of blowdown to remove solids formed during the vaporization of the process stream. Blowdown, as used here, refers to the removal of solids or unvaporized process stream with concentrated levels of dissolved or undissolved solids. A separator located in the pump-around loop is used for the separation of the blowdown.

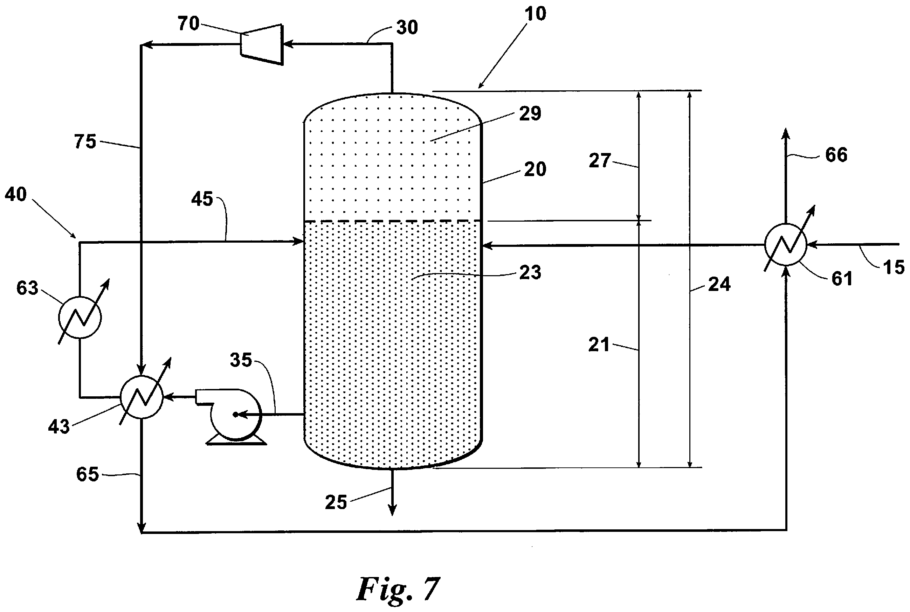

The different arrangements of the system and method 10 as shown in FIGS. 7 to 9 route a process stream 15 into a vessel 20 whose interior volume 24 is defined by a liquid pool zone 21 and a vapor separation zone 27. A heating medium 23 resides within the liquid pool zone 21 and this heating medium 23 is used to vaporize or partially vaporize the volatile components 29 of the process stream 15. Mixing of the process stream 15 and heating medium 23 occurs naturally within the liquid pool zone 21 as the process stream 15 enters zone 21.

The vaporized portion 29 of the process stream 15 migrates to the vapor separation zone 27 of the vessel 20 and is removed as a vaporized process stream 30, *i.e.,* steam. The vaporized process stream 30 is routed to a compressor 70 and the pressurized vaporized process stream 75 is routed to a heater/condenser 43 to produce a partially or totally condensed process stream 65, which is desalinated water. Heat from the heater/condenser 43 can be recovered and used to raise the temperature of the recycle stream 45.

As the volatile components 29 of the process stream 15 vaporize, the unvaporized portion 25 of the process stream 15 moves into the liquid pool zone 21 along with the heating medium 23. Because the unvaporized portion 25 of the process stream 15 is solids, or, if any liquid, immiscible with the heating medium 23, that portion 25 can separate from the heating medium 23 either within the vessel 20 or within a separator 47 located in the pump-around loop 40. The unvaporized portion 25, both liquid and undissolved solids, can be removed from the vessel 20 as blowdown. No stripping zone is used.

The separator 47 used in the pump-around loop 40 can be any separator suitable, including but not limited to a hydrocyclone, centrifuge, particulate filter, settling tank, or some other piece of separation device equivalent to these, or a combination of these. A heating medium stream 50 with reduced amounts of, or without, the unvaporized portion 25 of the process stream 15 exits the separator 47. Heat recovered from condensing the pressurized vaporized process stream 75 in heater/condenser 43 may be used to raise the temperature of the recycle stream 45. A secondary heater 63 may be used to provide additional heat. The heated recycle stream 45 then recycles back to the liquid pool zone 21 of the vessel 20. The heated recycle stream 45 may include some unvaporized portion 25 of the process stream 15. A process stream preheater 61 may be used to cool the condensed process stream 65, thereby producing cooled desalinated water 66, and to preheat the process stream 15 to recover the residual heat in the condensed process stream 65.

The heating medium 23 is maintained at an operating temperature that provides the desired vaporization effects. The heating medium 23 can be any heating medium depending on the make-up of process stream 15 and application-specific requirements. For example, the heating medium 23 could be one that one that is lighter than, heavier than, or (in the case of total vaporization of the process stream) the same density as the process stream 15. The heating medium 23 could also be one that forms, in the case of total vaporization, a homogeneous or heterogeneous mixture with the process stream 15. However, in the case of partial vaporization in which there is unvaporized water in the unvaporized portion 25, the heating medium 23 is immiscible with the process stream 15 to form a heterogeneous mixture. In either case, the heating medium 23 is less volatile than the volatile components of the process stream 15.

To keep the heating medium 23 at the selected operating temperature, a heater (not shown) can be placed in the liquid pool zone 21. Alternatively or additionally, a removed stream 35 of the heating medium 23, which may include an unvaporized portion 25 of the process stream 15 residing within the liquid pool zone 21, can be removed from the vessel 20 and routed to the pump-around loop 40 and its heater/condenser 43 and secondary heater 63. A heated recycle stream 45, which may include solids and unvaporized water from 25, then recycles back to the liquid pool zone 21.

An embodiment of a method to desalinate a process stream containing feed water includes routing the process stream 15 into the liquid pool zone 21 of the vessel 20 where it becomes mixed with a heating medium 23 that is less volatile than the process stream 15 and is maintained at an operating temperature determined by vaporization requirements to vaporize a volatile components portion 29 of the process stream 15. The method also includes removing the vaporized portion 29 of the process stream 15 from the vapor separation zone 27 of the vessel 20 as a vaporized process stream 30, *i.e.,* steam. The method may also include compressing at least a portion of the vaporized process stream 30 and condensing at least a portion of the pressurized vaporized process stream 75.

Condensing can take place in the pump-around loop 40. Heat recovered from the heater/condenser 43 can be used as pre-heating to raise the temperature of the recycle stream 45.

Prior to the process stream 15 entering the liquid pool zone 21 there may be no pre-treatment of the stream 15 as it exits the upstream process providing the stream 15 and there may be no mixing of the process stream 15 with the heating medium 23. Pretreatment means treatment such as but not limited to chemical dosing, filtration using selectively permeable membranes, separators, or the use of ion exchange, deaerators or blowdown prior to the process stream 15 entering vessel 20 (or some combination of the above pretreatment methods). (Coarse straining of a kind known in the art and typically done ahead of pretreatment might be used if the feed is taken directly from a natural body of water or from a source with excessive undissolved solids.) If any pre-mixing of the process stream 15 and heating medium 23 occurs outside of the liquid pool zone 21 *(see e.g.,* mixer 17 in FIG. 9), the pre-mixing may be done at a level below that at which vaporization occurs. Therefore, vaporization of the process stream 15 occurs within the liquid pool zone 21 of the vessel 20.

Pre-mixing may also be done to provide a relatively small amount of vaporization to enhance the pre-mixing and accelerate the fluid when it enters the liquid pool zone 21. The amount of vaporization that occurs may be less than that which occurs in the liquid pool zone 21. For example, during normal (non-turndown) operations no more than about 20% or about 5% of the volatile components in the process stream 15 may vaporize during pre-mixing. If the amount of vaporization does exceed that of the liquid pool zone, during normal operations vaporization during pre-mixing should not exceed about 80% or about 90% of the volatile components. Limiting the amount of vaporization during pre-mixing helps avoid the design challenges and scaling and plugging problems associated with the mixing zone of the prior art (*see* Background).

The heating medium 23 and process stream 15 can form a heterogeneous or homogeneous mixture (in the case of total or partial vaporization of water) or a heterogeneous mixture (in the case of partial vaporization of water) when residing within the liquid pool zone 21. Additionally, the density of the heating medium 23 can be greater than, less than, or (in the case of total vaporization) equal to that of the process stream 15.

The method may also include removing a portion 35 of the heating medium 23 residing in the liquid pool zone 21 of the vessel 20; raising a temperature of the removed portion or stream 35 to produce a heated recycle stream 45; and routing the heated recycle stream 45 back to the liquid pool zone 21. The removed heating medium stream 35 may also be routed to a separator 47 to produce a heating medium stream 50 substantially unvaporized portion-free or with a reduced unvaporized portion 25. Once stream 50 is heated (by heater/condenser 43 and secondary heater 63 arranged to transfer heat to the stream 50), it can be returned to the liquid pool zone 21 as heated recycled stream 45.

An embodiment of a system to desalinate a process stream includes a vessel 20 arranged to contact a process stream 15 containing feed water exiting an upstream process and route the process stream 15 into a heating medium 23 residing within the liquid pool zone 21 of the vessel 20. The interior volume 24 of the vessel 20 does not include a stripping zone for the removal of unvaporized portion 25. The heating medium 23 is less volatile than the process stream 15 and maintained at an operating temperature determined by vaporization requirements. The partially vaporized volatile components 29 of the process stream 15 migrate to the vapor separation zone 27 of the vessel 20.

A pump-around loop 40 is arranged to receive a portion 35 of the mixed heating medium 23 along with the unvaporized portion 25 of the process stream 15 that has moved into the heating medium 23 and then return the portion 35 back to the liquid pool zone 21 as a heated recycle stream 45. The pump-around loop 40 of the system can also include a heater/condenser 43 and secondary heater 63, in addition to a separator 47 arranged upstream of heater/condenser 43, so that a substantially unvaporized portion-free or reduced unvaporized portion heating medium stream 45 is being returned to the vessel 20.

Prior to contacting the heating medium 23, the process stream 15 may not be mixed with the heating medium 23 outside of the liquid pool zone 21 of the vessel 20. If any pre-mixing of the process stream 15 and heating medium 23 occurs, the mixing may be at a level below that required for vaporization of the volatile components 29. Pre-mixing may also be done to provide a relatively small amount of vaporization to enhance the pre-mixing and accelerate the fluid when it enters the liquid pool zone 21.

The system includes a compressor 70 arranged to receive at least a portion of the vaporized process stream 30. The system also includes a heater/condenser 43 arranged to receive at least a portion of the pressurized vaporized process stream 75 from the compressor 70. Heat recovered from condensing the pressurized vaporized process stream 75 can be used in the pump-around loop 40 to raise the temperature of the recycle stream 45.

### Steam Generation

The embodiments of the disclosure may simplify the system and method to generate steam from a process stream containing feed water; reduce the costs associated with prior art steam generation systems and processes; and eliminate the design and operational challenges presented by mixing zones located outside of the liquid pool zone of the vessel and stripping zones for solids removal. The disclosure eliminates the need for light heating mediums relative to the process stream and, in the case of total vaporization with a blowdown which contains the dissolved and undissolved solids portion of the process stream, eliminates the need for immiscible heating mediums. The disclosure also does not require the low temperature differential between the process stream and heating medium or recycle rates of at least ten times greater than that of the process stream.

The disclosure also reduces, and potentially eliminates, pretreatment for the process stream while at the same time minimizing or eliminating scaling and fouling of equipment. Because no heat exchanging surface is used directly in boiling, the disclosure can accommodate a wider range of feed water quality, thereby reducing the specifications for the feed water and allowing a much greater choice for the source of the feed water. Any pre-mixing of the process stream and the heating medium that occurs outside of the liquid pool zone may be done at a level below that at which the water vaporizes. Pre-mixing may also be done to provide a relatively small amount of vaporization to enhance the pre-mixing and accelerate the fluid when it enters the liquid pool.

In some embodiments, the system and method may be used to generate steam. Such embodiments eliminate the vaporization on the heat exchanging surface that drives existing feed water specifications. Therefore, a much wider choice for the source of (lower quality) feed water with very little or no pretreatment is allowed, including produced water and seawater sources.

The embodiments generate steam through vaporization (or partial vaporization) of the process stream containing feed water when the process stream contacts a heating medium residing in a liquid pool zone of a vessel. The vessel is arranged to directly receive the process stream, thereby eliminating the need for pre-treatment between it and the upstream process providing the stream. A pump-around loop heats a portion of the heating medium and recycles this heated portion back to the vessel.

The heating medium, which can be lighter or heavier than the process stream, is maintained at an operating temperature required for the desired steam generation effects. If any pre-mixing of the process stream and heating medium occurs outside of the liquid pool, the pre-mixing may be at a level below that at which vaporization occurs. Pre-mixing may also be done to provide a relatively small amount of vaporization to enhance pre-mixing and accelerate the fluid when it enters the liquid pool. The vessel can also make use of blowdown to remove solids formed during the vaporization of the process stream, or any solids and unvaporized portion of the process stream. Blowdown, as used here, refers to the removal of solids or unvaporized portions of the process stream with concentrated levels of dissolved or undissolved solids. A separator located in the pump-around loop can be used for the separation of the blowdown.

The different arrangements of the system and method 10 as shown in FIGS. 1-2 and FIG. 6 route a process stream 15 into a vessel 20 whose interior volume 24 is defined by a liquid pool zone 21 and a vapor separation zone 27. A heating medium 23 resides within the liquid pool zone 21 and this heating medium 23 is used to vaporize or partially vaporize the volatile components 29 of the process stream 15. Mixing of the process stream 15 and heating medium 23 occurs naturally within the liquid pool zone 21 as the process stream 15 enters the zone 21.

The now vaporized portions 29 of the process stream 15 migrate to a vapor separation zone 27 of the vessel 20 and are removed as a vaporized process stream 30, *i.e.,* steam.

As the volatile components 29 of the process stream 15 vaporize, the unvaporized portion 25 of the process stream 15 moves into the liquid pool zone 21 along with the heating medium 23. Because the unvaporized portion 25 is solids, or if any liquid, substantially immiscible with the heating medium 23, that portion can be separated from the heating medium 23 either within the vessel 20 or within a separator 47 located in the pump-around loop 40. The unvaporized portion 25, both liquid and undissolved solids, can be removed from the vessel 20 as blowdown. No stripping zone is used.

The separator 47 used in the pump-around loop 40 can be any separator suitable, including but not limited to a hydrocyclone, centrifuge, particulate filter, settling tank, or some other piece of separation device equivalent to these, or some combination of these devices. A heating medium stream 50 with reduced amounts of, or without, unvaporized portion 25 exits the separator 47 and passes through the heater 41. The heated recycle stream 45 then recycles back to the liquid pool zone 21 of the vessel 20. The heated recycle stream 45 may include part of the unvaporized portion 25 of the process stream 15.

The heating medium 23 is maintained at an operating temperature that provides the desired vaporization effects. The heating medium 23 can be any heating medium preferable depending on the make-up of process stream 15 and application-specific requirements. For example, the heating medium 23 could be one that one that is lighter than, heavier than, or (in the case of total vaporization of the water) the same density as the process stream 15. The heating medium 23 could also be one that forms, in the case of total vaporization, a homogeneous or heterogeneous mixture with the process stream 15. However, in the case of partial vaporization in which there is unvaporized water in the unvaporized portion 25, the heating medium 23 is immiscible with the process stream 15 to form a heterogeneous mixture. In either case, the heating medium 23 is less volatile than the water of the process stream 15.

To keep the heating medium 23 at the selected operating temperature, a heater (not shown) can be placed in the liquid pool zone 21. Alternatively or additionally, a removed stream 35 of the heating medium 23, which may include unvaporized portion 25 residing within the liquid pool zone 21, can be removed from the vessel 20 and routed to the pump-around loop 40 and its heater 41. A heated recycle stream 45, that may include solids and unvaporized water from 25, then recycles back to the liquid pool zone 21.

An embodiment of a method to generate steam includes routing the process stream 15 directly into the liquid pool zone 21 of the vessel 20 where it becomes mixed with a heating medium 23 that is less volatile than the process stream 15 and maintained at an operating temperature determined by vaporization requirements to vaporize a volatile components portion 29 of the feed water stream 15. The method also includes removing the vaporized portion 29 of the process stream 15 from the vapor separation zone 27 of the vessel 20 as a vaporized process stream 30, *i.e.,* steam.

Prior to the process stream 15 entering the liquid pool zone 21 there may be no pre-treatment of the stream 15 as it exits the upstream process providing the stream 15 and there may be no mixing of the process stream 15 with the heating medium 23. Pretreatment means treatment such as but not limited to chemical dosing, filtration using selectively permeable membranes, separators, or the use of ion exchange, deaerators or blowdown prior to the process stream 15 entering vessel 20 (or some combination of the above pretreatment methods). (Coarse straining of a kind known in the art and typically done ahead of pretreatment might be used if the feed is taken directly from a natural body of water or from a source with excessive undissolved solids.) If any pre-mixing of the process stream 15 and heating medium 23 occurs outside of the liquid pool zone 21 (*see e.g.,* mixer 17 in FIG. 6), the pre-mixing may be done at a level below that at which vaporization occurs. Therefore, all vaporization of the process stream 15 occurs within the liquid pool zone 21 of the vessel 20.

Pre-mixing may also be done to provide a relatively small amount of vaporization to enhance pre-mixing and accelerate the fluid 15 when it enters the liquid pool zone 21. The amount of vaporization that occurs may be less than that which occurs in the liquid pool. For example, during normal (non-turndown) operations no more than about 20% or about 5% of the volatile components in the stream 15 may vaporize during pre-mixing. If the amount of vaporization does exceed that of the liquid pool, during normal operations vaporization during pre-mixing should not exceed about 80% or about 90% of the volatile components. Limiting the amount of vaporization during pre-mixing helps avoid the design challenges and scaling and plugging problems associated with the mixing zone of the prior art (*see* Background).

The heating medium 23 and process stream 15 can form a heterogeneous or homogeneous mixture (in the case of total or partial vaporization of water) or a heterogeneous mixture (in the case of partial vaporization of water) when residing within the liquid pool zone 21. Additionally, the density of the heating medium 23 can be greater than, less than, or equal to (in the case of total vaporization) that of the process stream 15.

The method can also include the steps of removing a portion 35 of the heating medium 23 residing in the liquid pool zone 21 of the vessel 20; raising a temperature of the removed portion or stream 35 to produce a heated recycle stream 45; and routing the heated recycle stream 45 back to the liquid pool zone 21. The removed stream 35 can also be routed to a separator 47 to produce heating medium stream 50 substantially unvaporized portion-free or a reduced unvaporized portion 25. Once stream 50 is heated by heater 41, it can be returned to the liquid pool zone 21 as the heated recycled stream 45.

An embodiment of a system to generate steam includes a vessel 20 arranged to contact a process stream 15 exiting an upstream process and route the process stream 15 into a heating medium 23 residing within the liquid pool zone 21 of the vessel 20. The interior volume 24 of the vessel 20 does not include a stripping zone for the removal of unvaporized portion 25. The volatile components 29 of the process stream 15 migrate to the vapor separation zone 27 of the vessel 20.

A pump-around loop 40 is arranged to receive a portion 35 of the heating medium 23 mixed with the unvaporized portion 25, including unvaporized water, of the process stream 15 that has moved into the heating medium 23 and then return the portion 35 back to the liquid pool zone 21 as heated recycle stream 45. The pump-around loop 40 of the system can also include a heater 41 as well as a separator 47 arranged upstream of the heater 41 so that a substantially unvaporized portion-free or reduced unvaporized portion heated recycle stream 45 is returned to the vessel 20.

Prior to first contacting the heating medium 23, the process stream 15 may not be mixed with the heating medium 23 outside of the liquid pool zone 21 of the vessel 20. If any pre-mixing of the stream 15 and heating medium 23 occurs, the mixing may be at a level below that required for vaporization of the volatile components 29. Pre-mixing may also be done to provide a relatively small amount of vaporization to enhance the pre-mixing and accelerate the fluid when it enters the liquid pool zone 21.

### Reboiling of Process Stream

The embodiments of this disclosure may create a robust system for reboiling a process stream that is prone to scaling; simplify the system and method to partially vaporize a process stream so that it can be used for reboiler services; reduce the costs associated with prior art partial vaporization systems and processes so that it can be used for reboiler services; eliminate the design and operational challenges presented by mixing zones located outside of the liquid pool zone of the vessel and stripping zones for solids and unvaporized process stream removal so that it can be used for reboiler services; and eliminate the prior art's limitation of not being able to be used in partial vaporization applications in which a portion of the unvaporized process stream is in liquid form so that it can be used for reboiler services. The disclosure eliminates the need for light heating mediums relative to the process stream. The disclosure also does not require the low temperature differential between the process stream and heating medium or recycle rates of at least ten times greater than that of the process stream.

The disclosure also reduces, and potentially eliminates, pretreatment for the process stream that is prone to scaling while at the same time minimizing or eliminating scaling and fouling of equipment. Any pre-mixing of the process stream and the heating medium that occurs outside of the liquid pool zone may be done at a level below that at which the stream partially vaporizes. Pre-mixing may also be done to provide a relatively small amount of vaporization to enhance the pre-mixing and accelerate the fluid when it enters the liquid pool.

Embodiments of a system and method to reboil a process stream achieve partial vaporization of volatile components in the liquid pool zone of the vessel when the stream contacts a heating medium residing in the liquid pool zone. The vessel is arranged to directly receive the process stream, thereby eliminating pre-treatment between it and the upstream process providing the stream. A pump-around loop heats a portion of the heating medium and recycles this heated portion back to the vessel. The heating medium - which is immiscible with the process stream and can be lighter or heavier than the stream - is maintained at an operating temperature required for the desired partial vaporization (and reboiling) effects. Pre-mixing may also be done to provide a relatively small amount of vaporization to enhance the pre-mixing and accelerate the fluid when it enters the liquid pool. The vessel can also make use of blowdown to remove solids formed during the vaporization of the process stream from the liquid pool zone. Blowdown, as used here, refers to the removal of the unvaporized process stream with concentrated levels of dissolved or undissolved solids. A separate vessel located in the pump-around loop can be used for the separation of the blowdown.

The different arrangements of the system and method 10 as shown in FIGS. 1-2 and FIG. 6 route a process stream 15 into a vessel 20 whose interior volume 24 is defined by a liquid pool zone 21 and a vapor separation zone 27. The process stream 15 is supplied by a bottom (liquids) end of a distillation column (not shown). A heating medium 23 resides within the liquid pool zone 21 and this heating medium 23 is used to partially vaporize the volatile components 29 of the process stream 15. (Total vaporization may also be used.) Mixing of the process stream 15 and heating medium 23 occurs naturally within the liquid pool zone 21 as the process stream 15 enters the zone 21.

The now vaporized portions 29 of the process stream 15 migrate to a vapor separation zone 27 of the vessel 20 and are removed as a vaporized process stream 30. The vaporized process stream 30 is routed back to the distillation column to help drive separation in the column.

As the volatile components 29 of the process stream 15 vaporize, the unvaporized portion 25 of the process stream 15 moves into the liquid pool zone 21 along with the heating medium 23. Because the unvaporized portion 25 is immiscible with the heating medium 23, that portion can separate from the heating medium 23 in the vessel 20 or within a separator 47 located in the pump-around loop 40. The unvaporized portion 25, both liquid and undissolved solids, can be removed from the vessel 20 as blowdown.

The separator 47 used in the pump-around loop 40 can be any separator suitable, including but not limited to a hydrocyclone, centrifuge, particulate filter, settling tank, or some other piece of separation device equivalent to these or combinations of these. A heating medium stream 50 with reduced amounts of, or without, unvaporized portion 25 exits the separator 47 and passes through the heater 41. The heated recycle stream 45 then recycles back to the liquid pool zone 21 of the vessel 20. The heated recycle stream 45 may include part of the unvaporized portion 25 of the process stream 15.

The heating medium 23 is maintained at an operating temperature that provides the desired vaporization (and reboiler) effects. The heating medium 23 can be any heating medium depending on the make-up of process stream 15 and application-specific requirements. For example, the heating medium 23 could be one that one that is lighter than or heavier than the process stream 15. However, the heating medium 23 is immiscible with the process stream 15 to form a heterogeneous mixture with the process stream 15. The heating medium 23 is also less volatile than the volatile components 29 of the process stream 15.

To keep the heating medium 23 at the selected operating temperature, a heater (not shown) can be placed in the liquid pool zone 21. Alternatively or additionally, a removed stream 35 of the heating medium 23, which may include the unvaporized portion 25 of the process stream 15 residing within the liquid pool zone 21, can be removed from the vessel 20 and routed to the pump-around loop 40 and its heater 41. A heated recycle stream 45 that may include unvaporized portion 25 then recycles back to the liquid pool zone 21.

An embodiment of a method to reboil a process stream in a distillation system includes removing a process stream 15 from a distillation column and routing the process stream 15 directly into the liquid pool zone 21 of the vessel 20 where it becomes mixed with a heating medium 23 that is immiscible with and less volatile than the process stream 15 and maintained at an operating temperature determined by vaporization requirements to reboil the volatile components portion 29 of the process stream 15. The method also includes removing the vaporized portion 29 of the process stream 15 from the vapor separation zone 27 of the vessel 20 as a vaporized process stream 30 and routing the vaporized process stream back to the distillation column.

Prior to the process stream 15 entering the liquid pool zone 21, there may be no pre-treatment of the stream 15 as it exits the upstream process providing the stream 15 and there may be no mixing of the process stream 15 with the heating medium 23. Pretreatment means treatment such as but not limited to chemical dosing, filtration using selectively permeable membranes, separators, or the use of ion exchange, deaerators or blowdown prior to the process stream 15 entering vessel 20 (or some combination of the above pretreatment methods). (Coarse straining of a kind known in the art and typically done ahead of pretreatment might be used if the feed is taken directly from a natural body of water.) If any pre-mixing of the process stream 15 and heating medium 23 occurs outside of the liquid pool zone 21 *(see e.g.,* mixer 17 in FIG. 6), the pre-mixing may be done at a level below that at which vaporization occurs. Therefore, vaporization of the process stream 15 occurs within the liquid pool zone 21 of the vessel 20.

Pre-mixing may also be done to provide a relatively small amount of vaporization to enhance the pre-mixing and accelerate the fluid 15 when it enters the liquid pool zone 21. The amount of vaporization that occurs may be less than that which occurs in the liquid pool zone 21. For example, during normal (non-turndown) operations no more than about 5% or about 20% of the volatile components in the stream 15 vaporize during pre-mixing. If the amount of vaporization does exceed that of the liquid pool, during normal operations vaporization during pre-mixing should not exceed about 80% or about 90% of the volatile components. Limiting the amount of vaporization during pre-mixing helps avoid the design challenges and scaling and plugging problems associated with the mixing zone of the prior art *(see* Background).

The heating medium 23 and process stream 15 form a heterogeneous mixture when residing within the liquid pool zone 21. Additionally, the density of the heating medium 23 can be greater than or less than that of the process stream 15.

The method can also include removing a portion 35 of the heating medium 23 residing in the liquid pool zone 21 of the vessel 20; raising a temperature of the removed portion or stream 35 to produce a heated recycle stream 45; and routing the heated recycle stream 45 back to the liquid pool zone 21. The removed stream 35 can also be routed to a separator 47 to produce a heating medium stream 50 substantially unvaporized portion-free or with a reduced unvaporized portion 25. Stream 50, once heated by heater 41, can be returned to the liquid pool zone 21 as the heated recycled stream 45 (also substantially unvaporized portion-free or with a reduced unvaporized portion 25).

An embodiment of a system to reboil a process stream in a distillation system includes a vessel 20 arranged to contact a process stream 15 exiting a bottom portion of a distillation column and route the process stream 15 into a heating medium 23 residing within the liquid pool zone 21 of the vessel 20. The interior volume 24 of the vessel 20 does not include a stripping zone for solids and liquids removal. The heating medium 23 is immiscible with and less volatile than the process stream 15 and maintained at an operating temperature determined by vaporization (distillation column heating) requirements. The vaporized volatile components 29 of the process stream 15 migrate to the vapor separation zone 27 of the vessel 20.

A pump-around loop 40 is arranged to receive a portion 35 of the heating medium 23 mixed with part or all of the unvaporized portion 25 of the process stream 15 that has moved into the heating medium 23 and then return the portion 35 back to the liquid pool zone 21 as a heated recycle stream 45. The pump-around loop 40 of the system may also include a heater 41 as well as a separator 47 arranged upstream of the heater 41 so that a substantially unvaporized portion-free or reduced unvaporized portion heated recycle stream 45 is being returned to the vessel 20.

Prior to contacting the heating medium 23, the process stream 15 may not be mixed with the heating medium 23 outside of the liquid pool zone 21 of the vessel 20. If any pre-mixing of the stream 15 and heating medium 23 occurs, the mixing may be at a level below that required for vaporization of the volatile components 29. Pre-mixing may also be done to provide a relatively small amount of vaporization to enhance the pre-mixing and accelerate the fluid when it enters the liquid pool zone 21.

## Claims

1. A method to desalinate a process stream (15) containing feed water , the method comprising:
routing the process stream (15) into a liquid pool zone of a vessel (20), the liquid pool zone (21) including a heating medium (23), the heating medium (23) being a liquid that is less volatile than the process stream (15) and immiscible with the process stream (15) and maintained at an operating temperature determined by vaporization requirements;
vaporizing at least a portion of volatile components of the process stream (15) due to heating of the process stream by contact with the heating medium (23) in the liquid pool zone (21);
removing a vaporized portion of the process stream (15) from a vapor separation zone of the vessel (20) as a vaporized process stream (30) comprising steam;
compressing the removed vaporized process stream (30) to produce a pressurized process (75);
condensing at least a portion of the pressurized process stream (75) to produce a condensed process stream (65) which is the desalinated water
removing a portion (35) of the heating medium (23) and unvaporized process stream (25) from the liquid pool zone (21) of the vessel (20);
separating the unvaporized process stream (25) from the heating medium (50) in the removed portion (35) in a separator (47) located in a pump around loop (40), wherein the separated unvaporized process stream (25) includes solids;
raising a temperature of the separated heating medium (50) using heat recovered from condensing of the pressurized vaporized process stream (75) to produce a heated recycle stream (45); and
routing the heated recycle stream (45) back to the liquid pool zone (21).

2. A method according to claim 1 further comprising pre-mixing the process stream (15) and the heating medium (23) outside of the liquid pool zone (21) of the vessel (20).

3. A system to desalinate a process stream (1) containing feed water, the system comprising:
a vessel (20) comprising an inlet to receive the process stream (1) and an interior volume (24) defined by a liquid pool zone (21) containing a heating medium (23) and a vapor separation zone (27), wherein the heating medium (23) is a liquid that is less volatile than the process stream (15) and immiscible with the process stream (15) and is maintained at an operating temperature determined by vaporization requirements and when the process stream (15) is contacted by the heating medium (23) in the liquid pool zone (21) at least a portion of volatile components of the process stream (15) vaporize and migrate to a vapor separation zone of the vessel (20) and wherein the vapor separation zone (27) includes an outlet for a vaporized process stream comprising steam (30) exiting the vessel and the liquid pool zone (71) includes an outlet to allow removal of a portion (35) of the heating medium (23) and unvaporized process stream (25) in the liquid pool zone (71) and an inlet to receive a heated recycle stream (45);
a compressor (70) coupled to the outlet of the vapor separation zone (27) of the vessel (20) and arranged to compress vaporized process stream (30);
a pump-around loop (40) coupled to the liquid pool zone (21) of the vessel (20), the pump around loop including:
a condenser (43) arranged to receive at least a portion of pressurized vaporized process stream (75) from the compressor (70);
a separator (47) configured to receive a portion (35) of the heating medium (23) and unvaporized process stream (25) from the outlet of liquid pool zone (21) and to separate unvaporized process stream (25) from the heating medium (50), wherein the separated unvaporized process stream (25) includes solids; and
heating means configured to raise the temperature of the separated heating medium (50) using heat recovered from condenser (43) to produce a heated recycle stream (45) that is routed back to the liquid pool zone (21).

4. A system according to claim 3, further comprising
a mixer (17) located outside of the liquid pool zone (21) of the vessel (20) and configured to mix the process stream (15) and the heated recycle stream (45) from the pump-around loop (40) (20).

5. A system according to claim 3, further comprising a pre-heater (61) coupled to the inlet of the vessel and configured to heat the process stream (15) prior to the process stream (15) entering the liquid pool zone (21) of the vessel (20).

## Patentansprüche

1. Verfahren zum Entsalzen eines Speisewasser enthaltenden Prozessstroms (15), wobei das Verfahren umfasst:
Leiten des Prozessstroms (15) in eine Sumpfzone eines Behälters (20), wobei die Sumpfzone (21) ein Heizmittel (23) umfasst, wobei das Heizmittel (23) eine Flüssigkeit ist, die geringer flüchtig als der Prozessstrom (15) und mit dem Prozessstrom (15) unmischbar ist und auf einer durch Verdampfungsanforderungen bestimmten Betriebstemperatur gehalten wird;
Verdampfen wenigstens eines Teils von flüchtigen Bestandteilen des Prozessstroms (15) aufgrund von Erhitzen des Prozessstroms durch Kontakt mit dem Heizmittel (23) in der Sumpfzone (21);
Entfernen eines verdampften Teils des Prozessstroms (15) aus einer Dampfabscheidungszone des Behälters (20) als Dampf umfassenden verdampften Prozessstrom (30);
Verdichten des entfernten verdampften Prozessstroms (30), um einen druckbeaufschlagten Prozess (75) zu erzeugen;
Kondensieren wenigstens eines Teils des druckbeaufschlagten Prozessstroms (75), um einen kondensierten Prozessstrom (65) zu erzeugen, der das entsalzte Wasser ist,
Entfernen eines Teils (35) des Heizmittels (23) und unverdampften Prozessstroms (25) aus der Sumpfzone (21) des Behälters (20;
Abscheiden des unverdampften Prozessstroms (25) aus dem Heizmittel (50) im entfernten Teil (35) in einem in einer Umwälzschleife (40) befindlichen Abscheider (47), wobei der abgeschiedene unverdampfte Prozessstrom (25) Feststoffe umfasst;
Erhöhen der Temperatur des abgeschiedenen Heizmittels (50) unter Verwendung von aus dem Kondensieren des druckbeaufschlagten verdampften Prozessstroms (75) wiedergewonnener Wärme, um einen erhitzten Recyclestrom (45) zu erzeugen; und
Zurückführen des erhitzten Recyclestroms (45) in die Sumpfzone (21).

2. Verfahren gemäß Anspruch 1, ferner umfassend Vormischen des Prozessstroms (15) und des Heizmittels (23) außerhalb der Sumpfzone (21) des Behälters (20).

3. System zum Entsalzen eines Speisewasser enthaltenden Prozessstroms (1), wobei das System umfasst:
einen Behälter (20), umfassend einen Einlass zum Empfangen des Prozessstroms (1) und ein Innenvolumen (24), das durch eine ein Heizmittel (23) enthaltende Sumpfzone (21) und eine Dampfabscheidezone (27) definiert ist, wobei das Heizmittel (23) eine Flüssigkeit ist, die geringer flüchtig als der Prozessstrom (15) und mit dem Prozessstrom (15) unmischbar ist und auf einer durch Verdampfungsanforderungen bestimmten Betriebstemperatur gehalten wird, und wenn der Prozessstrom (15) durch das Heizmittel (23) in der Sumpfzone (21) kontaktiert wird, wenigstens ein Teil von flüchtigen Bestandteilen des Prozessstroms (15) verdampfen und in eine Dampfabscheidezone des Behälters (20) wandern, und wobei die Dampfabscheidezone (27) einen Auslass für einen Dampf (30 umfassenden verdampften Prozessstrom, der den Behälter verlässt, umfasst, und die Sumpfzone (71) einen Auslass, um das Entfernen eines Teils (35) des Heizmittels (23) und unverdampften Prozessstroms (25) in der Sumpfzone (71) zu ermöglichen, und einen Einlass, um einen erhitzten Recyclestrom (45) zu empfangen, umfasst;
einen mit dem Auslass der Dampfabscheidungszone (27) des Behälters (20) gekoppelten Verdichter (70), der dazu ausgelegt ist, verdampften Prozessstrom (30) zu verdichten;
eine mit der Sumpfzone (21) des Behälters (20) gekoppelte Umwälzschleife (40), wobei die Umwälzschleife umfasst:
einen Verdichter (43), der dazu ausgelegt ist, wenigstens einen Teil eines druckbeaufschlagten verdampften Prozessstroms (75) aus dem Verdichter (70) zu empfangen;
einen Abscheider (47), der dazu ausgelegt ist, einen Teil (35) des Heizmittels (23) und unverdampften Prozessstroms (25) aus dem Auslass der Sumpfzone (21) zu empfangen und unverdampften Prozessstrom (25) aus dem Heizmittel (50) zu verdampfen, wobei der abgeschiedene unverdampfte Prozessstrom (25) Feststoffe umfasst; und
ein Heizmittel, das dazu ausgelegt ist, die Temperatur des abgeschiedenen Heizmittels (50) unter Verwendung von aus dem Verdichter (43) wiedergewonnener Wärme zu erhöhen, um einen erhitzten Recyclestrom (45) zu erzeugen, der in die Sumpfzone (21) zurückgeleitet wird.

4. System gemäß Anspruch 3, ferner umfassend
einen außerhalb der Sumpfzone (21) des Behälters (20) befindlichen Mischer (17), der dazu ausgelegt ist, den Prozessstrom (15) und den erhitzten Recyclestrom (45) aus der Umwälzschleife (40) (20) zu vermischen.

5. System gemäß Anspruch 3, ferner umfassend einen mit dem Einlass des Behälters gekoppelten Vorerhitzer (61), der dazu ausgelegt ist, den Prozessstrom (15) zu erhitzen, bevor der Prozessstrom (15) in die Sumpfzone (21) des Behälters (20) eintritt.

## Revendications

1. Procédé de désalinisation d'un flux de traitement (15) contenant de l'eau d'alimentation, le procédé comprenant :
l'acheminement du flux de traitement (15) dans une zone de réserve de liquide d'une cuve (20), la zone de réserve de liquide (21) comportant un milieu de chauffage (23), le milieu de chauffage (23) étant un liquide qui est moins volatil que le flux de traitement (15) et non miscible avec le flux de traitement (15) et maintenu à une température de fonctionnement déterminée par les exigences de vaporisation ;
la vaporisation d'au moins une partie des constituants volatils du flux de traitement (15) occasionnée par le chauffage du flux de traitement par contact avec le milieu de chauffage (23) dans la zone de réserve de liquide (21) ;
l'élimination d'une partie vaporisée du flux de traitement (15) à partir d'une zone de séparation de vapeur de la cuve (20) sous la forme d'un flux de traitement vaporisé (30) comprenant de la vapeur ;
la compression du flux de traitement vaporisé éliminé (30) pour produire un traitement sous pression (75) ;
la condensation d'au moins une partie du flux de traitement sous pression (75) pour produire un flux de traitement condensé (65) qui est l'eau déstalinisée.
l'élimination d'une partie (35) du milieu de chauffage (23) et du flux de traitement non vaporisé (25) à partir de la zone de réserve de liquide (21) de la cuve (20) ;
la séparation du flux de traitement non vaporisé (25) à partir du milieu de chauffage (50) dans la partie éliminée (35) dans un séparateur (47) situé dans une boucle de pompage à recirculation (40),
dans lequel le flux de traitement non vaporisé séparé (25) comporte des matières solides ;
l'augmentation de la température du milieu de chauffage séparé (50) à l'aide de la chaleur récupérée à partir de la condensation du flux de traitement vaporisé sous pression (75) pour produire un flux de recyclage chauffé (45) ; et
l'acheminement du flux de recyclage chauffé (45) vers la zone de réserve de liquide (21).

2. Procédé selon la revendication 1, comprenant en outre le prémélange du flux de traitement (15) et du milieu de chauffage (23) à l'extérieur de la zone de réserve de liquide (21) de la cuve (20).

3. Système de désalinisation d'un flux de traitement (1) contenant de l'eau d'alimentation, le système comprenant :
une cuve (20) comprenant une entrée pour recevoir le flux de traitement (1) et un volume intérieur (24) défini par une zone de réserve de liquide (21) contenant un milieu de chauffage (23) et une zone de séparation de vapeur (27), dans lequel le milieu de chauffage (23) est un liquide qui est moins volatil que le flux de traitement (15) et non miscible avec le flux de traitement (15) et est maintenu à une température de fonctionnement déterminée par les exigences de vaporisation et lorsque le flux de traitement (15) est mis en contact avec le milieu de chauffage (23) dans la zone de réserve de liquide (21), au moins une partie des constituants volatils du flux de traitement (15) se vaporise et migre vers une zone de séparation de vapeur du récipient (20) et dans lequel la zone de séparation de vapeur (27) comporte une sortie pour un flux de traitement vaporisé comprenant de la vapeur (30) sortant de la cuve et la zone de réserve de liquide (71) comporte une sortie pour permettre l'élimination d'une partie (35) du milieu de chauffage (23) et du flux de traitement non vaporisé (25) dans la zone de réserve de liquide (71) et une entrée pour recevoir un flux de recyclage chauffé (45) ;
un compresseur (70) accouplé à la sortie de la zone de séparation de vapeur (27) de la cuve (20) et agencé pour comprimer le flux de traitement vaporisé (30) ;
une boucle de pompage à recirculation (40) accouplée à la zone de réserve de liquide (21) de la cuve (20), la boucle de pompage à recirculation comportant :
un condenseur (43) agencé pour recevoir au moins une partie du flux de traitement vaporisé sous pression (75) provenant du compresseur (70) ;
un séparateur (47) conçu pour recevoir une partie (35) du milieu de chauffage (23) et du flux de traitement non vaporisé (25) provenant de la sortie de la zone de réserve de liquide (21) et pour séparer le flux de traitement non vaporisé (25) du milieu de chauffage (50), dans lequel le flux de traitement non vaporisé séparé (25) comporte des matières solides ; et
le moyen de chauffage conçu pour augmenter la température du milieu chauffant séparé (50) à l'aide de la chaleur récupérée à partir du condenseur (43) pour produire un flux de recyclage chauffé (45) qui est acheminé de retour vers la zone de réserve de liquide (21).

4. Système selon la revendication 3 comprenant en outre :
un mélangeur (17) situé à l'extérieur de la zone de réserve de liquide (21) de la cuve (20) et conçu pour mélanger le flux de traitement (15) et le flux de recyclage chauffé (45) provenant de la boucle de pompage à recirculation (40) (20).

5. Système selon la revendication 3, comprenant en outre un préchauffeur (61) accouplé à l'entrée de la cuve et conçu pour chauffer le flux de traitement (15) avant que le flux de traitement (15) n'entre dans la zone de réserve de liquide (21) de la cuve (20).
